Europäisches Patentamt

European Patent Office

Office européen des brevets

(19)

(11) **EP 1 385 124 A1**

(12) **EUROPEAN PATENT APPLICATION**

(43) Date of publication:
**28.01.2004 Bulletin 2004/05**

(51) Int Cl.$^7$: **G06T 11/00**, G01T 1/161

(21) Application number: **02291900.5**

(22) Date of filing: **26.07.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicants:
• **Cruickshank, Garth
Birmingham B13 9DZ (GB)**
• **Hennion, Claude
75013 Paris (FR)**
• **Dickinson, Joe
Jersey, Channel Islands (GB)**
• **Naylor, David B.
Cheam, Surrey SM2 6DU (GB)**

(72) Inventors:
• **Cruickshank, Garth
Birmingham B13 9DZ (GB)**
• **Hennion, Claude
75013 Paris (FR)**
• **Dickinson, Joe
Jersey, Channel Islands (GB)**
• **Naylor, David B.
Cheam, Surrey SM2 6DU (GB)**

(74) Representative: **Burbaud, Eric
Cabinet Plasseraud
65/67 rue de la Victoire
75440 Paris Cedex 09 (FR)**

(54) **Coded aperture imaging method and device**

(57) Imaging process for generating a 3-dimension representation of a 3-dimension observation field, including the following steps:

(a) detecting radiations emitted by a plurality of voxels in the observation field, through a collimator (5) having radiation transmitting areas (16) which are unevenly distributed, thus determining a detected 2-dimension distribution H(I,J) of the radiations detected through the collimator,

(b) and determining an estimated 3-dimension distribution of the radiation emissions hes(i,j,k) of the voxels in the observation field, which corresponds to the detected 2-dimension distribution H(I,J).

FIG.2

EP 1 385 124 A1

**Description**

The present invention relates to imaging methods and devices, in particular (but not exclusively) for 3D medical imaging.

More particularly, the invention concerns an imaging process for generating a 3-dimension representation of a 3-dimension observation field by detecting radiation emissions emitted by a plurality of voxels (i.e. elementary volumes of small dimensions) in said observation field (these radiations may be of any wavelength, and may be emitted by said voxels themselves as primary emitting sources [for instance if they contain a radioactive tracer] or alternately, said radiations may come from an outside source of radiations and be scattered by said voxels which then constitute "secondary" emitting sources of radiations).

The known imaging processes of this type generally imply the use of heavy, bulky and costly devices, for instance CT, MRI, PET, or MEG scans.

One objective of the present invention is to alleviate at least part of these drawbacks.

To this end, the invention proposes an imaging process for generating a 3-dimension representation of a 3-dimension observation field, said process including at least the following steps:

(a) detecting radiations emitted by a plurality of voxels in the observation field, through a collimator having radiation transmitting areas which are non-uniformly distributed, said radiations being detected in a set of pixels forming a 2-dimension image of detection, thus determining a detected 2-dimension distribution $H(I,J)$ of the radiations detected through the collimator, I and J being two indicia representing a position of each pixel where the radiations are detected,

(b) and determining an estimated 3-dimension distribution of the radiation emissions $hes(i,j,k)$ of the voxels in the observation field, which corresponds to said detected 2-dimension distribution $H(I,J)$, where i, j and k are three indicia representing the position of each voxel, said estimated 3-dimension distribution of the radiation emissions $hes(i,j,k)$ constituting said 3-dimension representation of the observation field.

Thanks to these dispositions, it is possible to obtain a 3-dimension representation of the observation field, enabling to produce either a 3-dimension image or at least one 2-dimension section view of the observation field.

This 3-dimension representation may be obtained by a simple apparatus comprising:

i) a camera or another radiation detector, fitted with a special collimator having a non uniform transmittance instead of a conventional collimator of uniform transmittance,

ii) specialized novel mathematical *software* for transforming the encrypted pattern produced by this collimator on the detector into a virtual 3D image.

Further, this apparatus may remain immobile during the imaging process.

Therefore, said 3-dimension representation may be obtained by simple, light and compact means, at a relatively low cost.

In preferred embodiments of the invention, recourse may further be had to one and/or other of the following dispositions:

- in step (a), the collimator through which said radiations are detected, has a unique spatial pulse response for each voxel of the observation field (said spatial pulse response of a voxel may be defined as the distribution $R(i, j,k;I, J)=H(I,J)/(N.T)$, $H(I,J)$ being the distribution of radiations which is detected when only the voxel of indicia i, j, k emits radiations at a rate of N radiations per second and T being the exposure time in seconds) ;
- in step (a), the radiations are detected around a main axis and the collimator through which said radiations are detected, has an average transmittance, averaged on a circle of radius r around said main axis, which varies with said radius r ;
- in step (a), the collimator through which said radiations are detected, has an average transmittance, averaged on a circle of radius r around said main axis, which sinusoidally with the square of the radius r ;
- in step (a), the radiation transmitting areas of the collimator through which said radiations are detected, are evenly distributed on each circle of radius r around said main axis, comprised in the collimator ;
- in step (b), the estimated distribution of radiation emissions $hes(i,j,k)$ is estimated by an iterative process comprising successive iterations, starting from a provisional estimated distribution of the radiation emissions $hes_0(i,j,k)$, and each $n^{th}$ iteration includes the following sub-steps:

(b1) determining a calculated 2-dimension distribution of radiations $H'_{n-1}(I,J)$ in the pixels, corresponding to the provisional distribution of radiation emissions $hes_{n-1}(i,j,k)$

(b2) calculating an error function $E_{n-1}$ representative of differences between said calculated distribution $H'_{n-1}$ (I/J) and said detected distribution H(I,J),

(b3) if said error function has a value which is comprised in a predetermined range (i.e., generally when said error function is less than a predetermined value), stopping the iterative process and deciding that hes(i,j,k) =$hes_{n-1}$(i,j,k) ; and if said error function has a value which is not comprised in said predetermined range, determining a new provisional estimated distribution of radiation emissions $hes_n$(i,j,k) so as to decrease the error function ;

- in step (b1), the calculated 2-dimension distribution of radiations $H'_{n-1}$(I,J) in the pixels is calculated by the formula :

$$H'_{n-1}(I,J) = \sum_i \sum_j \sum_k R(i,j,k;I,J).hes_{n-1}(i,j,k) \text{ ,}$$

where R(i,j,k;I,J) is a predetermined pulse response (calculated or experimentally measured in an initial step, before any solid object be present in the observation field for imaging) between each voxel of the observation field and each pixel of the image of detection (said pulse responses between a voxel and a pixel may be defined as R (i,j,k;I,J)=H(I,J)/(N.T), H(I,J) being the number of radiations which is detected at pixel (I,J) when only the voxel of indicia i, j, k emits radiations at a rate of N radiations per second, T being the exposure time in seconds) ;

- in sub-step (b2), said error function is calculated according to the following formula :

$$E_{n-1} = \sum_I \sum_J (H(I,J) - H'_{n-1}(I,J))^2 \quad ;$$

- in sub-step (b3), one determines the new provisional estimated distribution of radiation emissions by a gradient method ;
- said iterative process is conducted successively for several groups of voxels of the observation field (each group of voxels may include either only one voxel, in which case the iterative process is conducted successively for each voxel of the observation field, or several voxels, in which case the iterative process is conducted in parallel for several voxels) ;
- each group of voxels includes several non-contiguous voxels ;
- in step (a), said detected 2-dimension distribution H(I,J) is representative of a number of radiations detected in each pixel in a certain bandwidth, and in step (b) said estimated 3-dimension distribution of the radiation emissions hes(i,j,k) is representative of a number of radiations emitted by the voxels of the observation field in said bandwidth.

Besides, another object of the invention is an imaging device specially designed to carry out the imaging method as defined above.

Other features and advantages of the invention will appear from the following detailed description of one embodiment thereof, given by way of non-limiting example, with regard to the accompanying drawings.

In the drawings:

- figure 1 is a schematic drawing of a device adapted for carrying out the imaging method according to an embodiment of the invention,
- figure 2 is a face view of the collimator plate of the device of figure 1,
- and figure 3 shows a sector of the collimator plate of figure 2.

In the different figures, the same references designate identical or similar elements.

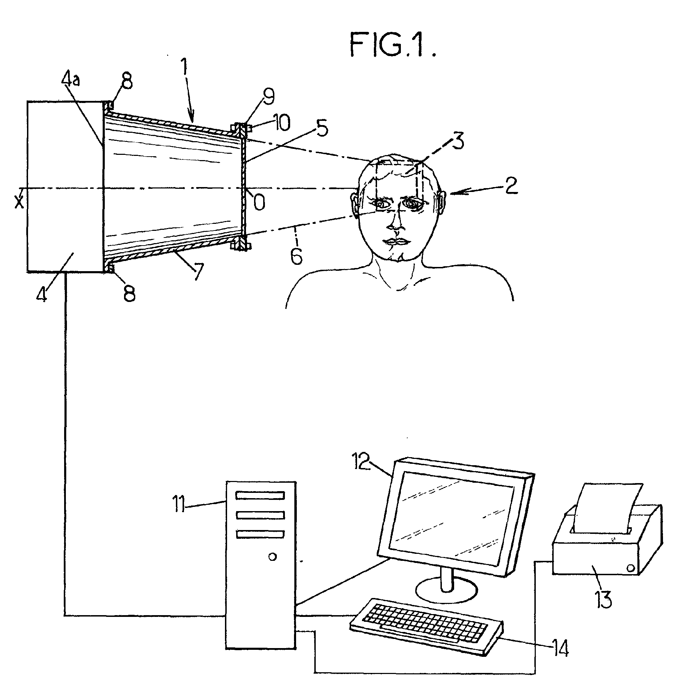

The imaging device 1 shown in figure 1, which is exemplary of the devices useable to carry out the imaging method according to the invention, may be useful in particular, but not exclusively, for medical imaging.

In particular, the imaging device 1 may be used for generating a 3-dimension representation of a 3-dimension observation field 3 such as a portion of the body of a patient 2, containing for instance a tumor, as will be explained in greater details hereafter.

Each voxel, i.e. each elementary volume of small dimensions constituting the observation field, emits radiations which may come :

- either from a radioactive source such as a radioactive tracer contained in said voxel, uptaken for instance by a tumor present in the observation field,

- or from an outside source of radiations which illuminates the observation field 3, in which case the observed radiations may be constituted by radiations scattered by said voxels which then constitute secondary emitting sources of radiations.

The voxels in the observation field will be identified hereafter by three indicia i, j, k corresponding to their coordinates on three perpendicular axes.

The radiations emitted by the voxels of the observation field 3 are sensed by a detector 4, for instance a gamma camera. The detector 4 counts (e.g. through counters and/or integrators) the radiations in each pixel of a 2-dimension image of detection of the radiation emissions, said image of detection being taken in a surface which may generally be a planar surface parallel to the front face 4a of the detector 4. The pixels in the 2-dimension image will be identified hereafter by two indicia I, J corresponding to their coordinates on two perpendicular axes.

The detector 4 senses radiations in a certain bandwidth, which may correspond to gamma rays as mentioned above, or to X rays, ultraviolet light, visible light or infrared light.

The detector 4 may be constituted by a gaseous detector, a solid state detector, or any other conventional detector, or the detector described in European patent application n°01401805.5 filed on July 5, 2001. Preferably, the detector 4 allows detection of radiations simultaneously in a complete surface (generally a plane), which enables the acquisition of the the 2-dimension image of the radiation emissions in one step. However, the detector 4 could possibly include a line of elementary detectors which is moved inside the casing of the detector 4 in order to acquire, line after line, the image of the radiation emissions.

The detector 4 has a main axis of observation X which is directed toward a center of the observation field 3, and said detector 4 receives the radiations emitted by the observation field 3 through a collimator plate 5 which is preferably disposed substantially perpendicular to the main axis X, with the center O of said collimator plate disposed on said main axis X.

The collimator plate 5 may be disposed for instance at about half the distance between the detector 4 and the observation field 3. Further, the collimator plate 5 is disposed such that any radiation coming from the observation field 3 arrives on an active receiving surface of the detector 4, i.e. a surface in which radiation can be detected.

Thus, in the example shown in figure 1, the radiations passing through the collimator plate 5 are comprised in the cone 6 centered on the axis X, and each line included in said cone 6 arrives on the detecting surface 4a of the detector 4.

The collimator plate may be for instance in the range 10-30 cm in diameter, while the detector may have for instance a square front face 4a in the range of 30-50 cm in width.

Advantageously, the collimator plate 5 may be retained on the detector 4 by a demountable metal or plastic frame set which may be of frusto-conical form. The frame 7 may be fixed at a first end thereof to the detector 4, for instance through bolts 8 or other fixation means, while the other end of the frame 7 may be fixed for instance to a rigid ring 9, through bolts 10 or other fixation means, said ring 9 retaining the collimator plate 5. Preferably, the fixation means used for retaining the collimator plate, enable to adjust the position of said collimator plate.

The output of the detector 4 may be connected to a micro-computer 11 or other computing means, for reconstructing the 3-dimension representation of the observation field, starting from the 2-dimension image of the radiations emissions detected through the collimator plate 5, as will be explained hereafter.

The micro-computer 11 may be a conventional micro-computer, connected for instance to a screen 12, a printer 13, a keyboard 14 and/or other user interfaces, or said micro-computer 11 may be a specific micro-computer.

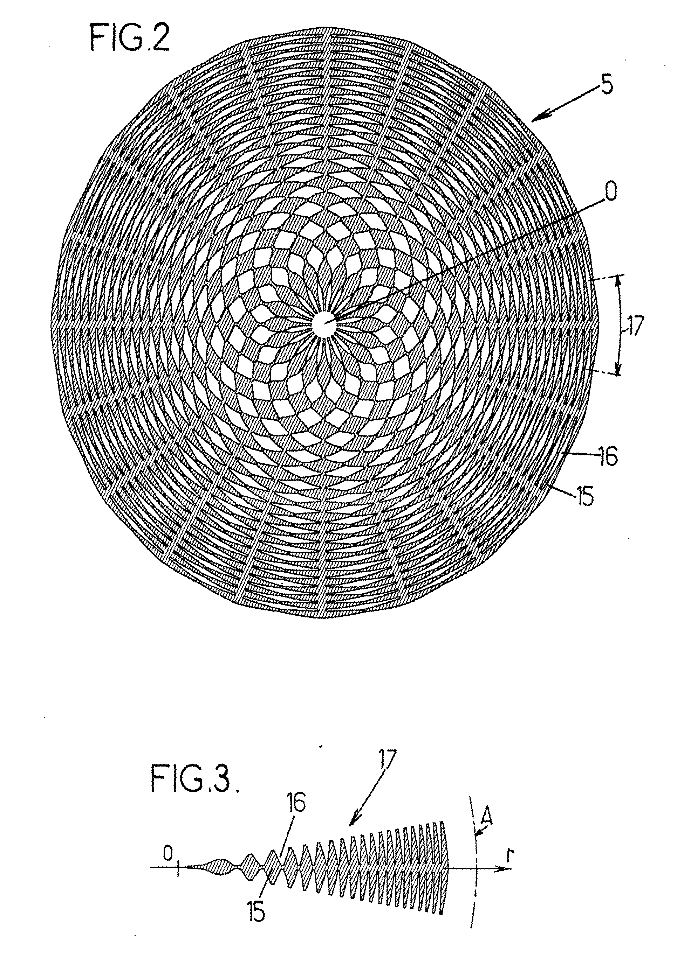

As shown in figure 2, the plate collimator 5 may constitute a disc or sheet of metal (e.g. steel, stainless steel, molybdenum, tungsten, etc.) or other appropriate material which has a high absorption coefficient for the radiation being used.

Typical thickness of the plate will be up to 1-2mm, but may be different so that said thickness be optimized for the energy of the radiation in use (e.g. gamma-rays, X-rays, visible radiation, ultra violet radiation and infrared radiation).

The collimator plate 5 has opaque areas 15 constituted by the material making up said collimator plate, and radiation transmitting areas 16 which are generally constituted by cutouts made in the collimator plate 5 (for instance by laser cutting).

These radiation transmitting areas 16 constitute a pattern which encodes the radiations coming from the observation field in a unique way when said radiations pass (non-diffractively) through the plate 5 to the detector 4, such that it becomes later possible to reconstruct the 3-dimension image of the observation field (or a 2-dimension section view of said observation field) by decoding the 2-dimension image of the radiations detected by the detector 4.

More specifically, the collimator plate 5 through which said radiations are detected, has preferably a unique spatial pulse response for each voxel of the observation field. Said pulse response of a voxel may be defined as the distribution $R(i,j,k;I,J)=H(I,J)/(N.T)$, where $H(I,J)$ is a distribution of the radiations which are detected in the pixels of indicia I, J of the 2-dimension image of the radiation emissions when only the voxel of indicia i, j, k emits radiations at a rate of N radiations per second and T is the duration of observation or exposure time (N may be the total rate of emission in all directions, or only the rate of the total of the emissions which are detected by the detector 4 through the plate 5).

The radiation transmitting areas 16 of the collimator 5 through which said radiations are detected, are generally non-uniformly distributed. However, these areas 16 may be evenly distributed on each circle of radius r around the center O (or at least any circle comprised in the collimator plate 5, if said plate is not circular in shape).

In an advantageous embodiment, the collimator plate 5 has an azimuthally-averaged transmittance (i.e. averaged on a circle of radius r around the center O), which varies with the radius r. For instance, said azimuthally-averaged transmittance may vary sinusoidally with the square of the radius r.

In a particularly preferred example, as taught in document GB-A-2 252 843 and T. D. Beynon, Optics Letters vol. 17, no. 7, pp 544-546 (1992), said azimuthally-averaged transmittance t may be in the form :

$$t = 1/2(1+ \cos(\frac{2\pi r^2}{R^2} + b)),$$

where R is the total radius of the collimator plate 5 and b is a constant.

In this example, as shown in figures 2 and 3, the pattern of the collimator plate 5 may be constituted by the angular repetition of a disk sector 17, in which the opaque portions 15 are formed by arcs of circle A of curvilinear length L such that :

$$L = \frac{\pi r}{n} .(1 - \cos(\frac{2\pi r^2}{R^2})),$$

where n is the number of disk sectors angularly repeated in the collimator plate 5.

An advantageous design for gamma rays is that shown in Figures 2 and 3 which has 20 sectors (n=20) and 20 opaque zones in each sector. However this design can be adjusted, in particular for radiations of other wavelengths.

Evidence shows that such a system has the ability to convey resolution of an object of 1 to 3 mm (millimeters) through the image pattern, to a gamma camera giving it a 2-dimension resolution of the same order.

The nature of the design of the encoding plate collimator 5 ensures that the intensity distribution H(I,J) (i.e. the number of radiations detected in each pixel) in the 2-dimension image of detection replicates the intensity distribution that would have been recorded on a conventional Gabor hologram formed by interference. The complex image of detection formed through the collimator plate 5 on the detector can then be treated as a holographic image or shadowgraph which, through novel formulation, enables to reconstitute a 3-dimension electronic image of the observation field, even though the emitted radiation is incoherent (contrary to conventional holographs).

This reconstituted 3-dimension representation of the observation field is an estimated 3-dimension distribution of the radiation emissions hes(i,j,k) of the voxels in the observation field, which corresponds to said detected 2-dimension distribution H(I,J), and which may be computed by using a theoretical model of propagation of the radiations between the voxels of the observation field and the pixels of the image of detection.

This theoretical model may be calculated from the form of the collimator plate, using the physics processes which determine the image detected by the detector 4 (such model may include for instance a complete mathematical representation of the collimator plate with its photon scattering and absorption, and may also possibly include a mathematical representation of the photon scattering and absorption of the bones and tissues in or near the observation field so that transmission functions for each passage of particles from source to detector can be included to refine the predictive model (a classical 3 dimension image of the patient's body in the region to be observed will generally be already available before the imaging with the device 1, which will allow a unique transmission function for the component parts of the track relating to each phase to be described, for instance if the device 1 is used for peroperative imaging, in particular peroperative imaging of a tumor being excised).

As an alternative, such theoretical model may also be determined experimentally, in a preliminary step wherein one places a punctual source of radiation successively in each voxel i, j, k of the observation field, before any imaging is carried out, and for each of these voxels, one measures the distribution H(I,J) of detected numbers of radiations (intensities), thus obtaining spatial pulse responses R(i,j,k;I,J)=H(I,J)/(N.T), N being N being the rate of radiations per second at which the voxel of indicia i, j, k emits radiations, T being the exposure time in seconds, i.e. the duration of detection for each voxel.

When using the above pulse responses, the calculated distribution of radiations H'(I,J) detected in the pixels of the image of detection is linked to the estimated distribution of radiations hes(i,j,k) emitted by the voxels of the observation field, by the following formula :

$$H'(I,J) = \sum_i \sum_j \sum_k R(i,j,k;I,J).hes\ (i,j,k)\ .$$

More particularly, the estimated distribution of radiation emissions hes(i,j,k) may be estimated by an iterative process comprising successive iterations (inverse algorithm), starting from an initial provisional estimated distribution of the radiation emissions $hes_0(i,j,k)$.

This initial provisional estimated distribution $hes_0(i,j,k)$ may be predetermined and may in particular be constituted by a uniform distribution (for instance $hes_0(i,j,k)=1$ for all voxels).

As an alternative, the initial provisional estimated distribution $hes_0(i,j,k)$ may be a function of the measured distribution H(I,J), for instance based on Fourier transform techniques (including fast Fourier transforms, discrete Fourier transforms, correlation techniques).

Starting from the above initial provisional estimated distribution $hes_0(i,j,k)$, the computer 11 -makes several iterations, wherein each $n^{th}$ iteration includes the following sub-steps:

(1) determining a calculated 2-dimension distribution of radiations $H'_{n-1}(I,J)$ in the pixels, corresponding to the provisional distribution of radiation emissions $hes_{n-1}(i,j,k)$ , for instance:

$$H'_{n-1}(I,J) = \sum_i \sum_j \sum_k R(i,j,k;I,J).hes_{n-1}(i,j,k)\ ,$$

(2) calculating an error function $E_{n-1}$ representative of differences between said calculated distribution $H'_{n-1}(I,J)$ and said detected distribution H(I,J), for instance:

$$E_{n-1} = \sum_I \sum_J (H(I,J) - H'_{n-1}(I,J))^2\ ,$$

(3) if said error function is less than a predetermined threshold, stopping the iterative process and deciding that hes (i, j, k) =$hes_{n-1}$ (i, j, k) ; and if said error function has a value which is not less than said threshold, determining a new provisional estimated distribution of radiation emissions $hes_n(i,j,k)$ so as to decrease the error function: for instance, said new provisional estimated distribution of radiation emissions may be determined by a gradient method. Two iterative estimations may allow the prediction of the third based on the gradient of the functioning formula.

The above iterative process is conducted successively for several groups of voxels of the observation field. Each group of voxels may include:

- either only one voxel, in which case the iterative process is conducted successively for each voxel of the observation field,
- or preferably several voxels, in which case the iterative process is conducted in parallel for all voxels of each group, said voxels of each group being preferably not contiguous.

The 3-dimension representation hes(i,j,k) of the observation field which is thus obtained after convergence of the iterative process in all voxels of the observation field, may be used either for generating a 3-dimension image of the observation field (e.g. a perspective view), or for generating one or several 2-dimension section views of the observation field.

By way of examples, a few possible applications of the process according to the invention are given hereafter:

- detection of relative uptake of target organs, tissues or pathological disease areas or processes, of a specific isotope system or isotope labeled ligand system, allowing high speed real time definition and resolution with a linearity of response allowing measurement of both volume and specific activity of the target cells, displayed as a two or three dimensional quantitative visual image, in animals or humans, possibly with concurrent analysis of more than one isotope or labeled isotope system based on energy level discrimination;
- merging of the 3-dimension image obtained from the imaging process of the invention with other images by image fusion to achieve precise anatomical coincidence of measured activity to anatomical, and morphological sites indicated by Magnetic Resonance Imaging (MRI), Computerized Axial Tomography (CAT), Ultrasound, Single Photon Emission Tomography (SPECT/SPET), Positron Emission Tomography (PET), Magnetic Intensity Devices (IMR, MEG), and other devices dependent on the imaging of X-ray, visual (microscope), or extra visual wavelengths (Near Infra-Red) ;

- use of the above imaging process to analyze existing commercially available isotopes, labeled ligands, and labeled drugs of energies from more than 510kev downwards;
- incorporation of the imaging method into shaped and reconstructed detector devices based on the gamma camera devices so described in this application to optimize 2D and 3D and quantitation;
- imaging and quantitation, when applied to regions of the human body especially the head and brain, neck, thorax and contents including thoracic wall, breast tissue, lungs, cardiac and pericardial components, and associated vascular structures, abdominal and pelvic regions and contents and visualization of tissues and vascular structures of the limbs;
- analysis of components in the normal and pathological states, with particular reference to ischaemic, infective, oncological, degenerative and traumatic processes;
- imaging of brain and spinal tumors in conjunctive integration with various real time image guided or image directed neurosurgical devices, in particular to provide real-time (viz-peroperative) images to indicate the efficiency of surgical excision and/or to delimit eloquent and sensitive areas of the brain concurrently with areas intended for resection in real time enabling improved excision and reduced risk of injury or damage to allied brain, thereby reducing morbidity;
- facilitating real time imaging of spinal tumors and pathology, in conjunction with fluoroscopic and X-ray devices;
- imaging of large, medium and small (tissue level) vascular structures in the brain and their allied parenchyma, for the purposes of detecting normal perfusion, ischaemia and hyperaemia, in normal and pathological states so described above. This utilizes the unique ability of the detector device in this application to count rapidly all incident gamma radiation, from point sources dependent on position, concentration and activity, at high resolution using existing isotope or labeled ligand systems, in short periods of time allowing rapid sequence analysis through multiple dosing and imaging, of dynamic pathological changes or therapeutic responses, without delay problems, and at low absorbed radiation doses, even in iterative dosing schedules;
- near real-time analysis of brain status in ischaemic, traumatic and neurosurgical patients, to follow pathology and response to therapeutic maneuvers e.g. improvement in tissue perfusion after thrombolysis in cerebrovascular accident ('stroke'), improvement in brain perfusion and/or metabolism, after relief of raised intracranial pressure, or elevation of cerebral perfusion pressure, in trauma or subarachnoid haemorrhage;
- measure and visualization of lesions in the brain such as tumors, to determine tumor load, and in real time and delayed time to image coincidentally therapeutic instruments such as drugs and their distribution to the imaged tumor (coverage), gene therapy, radiation (vide infra), thus enabling confirmation of access, early detection of response, and proof of mechanistic principle, in such a way as to accelerate development and reduce costs in the introduction of new treatments, whilst allowing reduction of risks to the patient;
- incorporation of the imaging process with imaging required for radiation oncology, stereotactic radiosurgery (SRS), stereotactic radiotherapy (SRT), conformal planning, intensity modulated radiotherapy (IMRT) using continuous dynamic treatment or step and shoot to determine target size and dosage distribution;
- measure of direct radiation applied, and dosage delivered;
- incorporation of the imaging method to the area of Boron Neutron Capture Therapy (BNCT) to determine the gamma emission following the initial n-$\alpha$ reaction as a stoichiometric measure of received radiation dose to tumor and/or tissue in the brain and other sites as indicated above, thus providing a real-time measure and image of dose distribution and dose received, and solving one of the major problems in determining microdose prescription, and radiation injury in this novel but complex treatment. This will enable BNCT to be used more widely and as safely or more so, as conventional radiation methods;
- detection, diagnosis, image directed surgery, and image directed treatment of diseases of the ear, nose and throat with particular reference to oncology;
- detection, diagnosis, image directed surgery, and image directed treatment of diseases of the kidney with particular reference to oncology;
- detection, diagnosis, image directed surgery, and image directed treatment of diseases of the thyroid gland with particular reference to oncology;
- detection, diagnosis, image directed surgery, and image directed treatment of diseases of bone with particular reference to bone density and oncology;
- imaging of lung, breast, and gastrointestinal tract for the detection of, and screening for malignancy using both the principal methods of unselective relative isotopic activity uptake, and selective specific targeting with directed labeled ligands, based on the high sensitivity and resolution afforded by the performance of the detector device described in this application, thereby offering the possibility of improved early detection over existing methods, such as chest X-ray, mammography or bowel series x-rays or endoscopy, in a more reliable cost effective manner, acceptable to patients, and using a device and protocol allowing mass use at low cost levels;

- imaging of cardiac tissue function and pump performance in real or near real-time to visualize and quantify heart perfusion, cardiac output, and ventricular ejection fractions at rest and during exercise;
- analysis of cardiopulmonary performance of right and left ventricles at rest and during exercise;
- imaging of cardiac tissue in cardiomyopathy, heart failure, situations of ischaemia, valvular dysfunction, and hibernation both acutely and episodically;
- assessment of cardiac performance and cardiac tissue in painful and non-painful ischaemic states to elucidate recoverable or salvageable muscle tissue;
- cardiac (mobile) monitoring of patients in the intensive therapy unit setting by virtue of the portability of the detector system described in this application;
- quantitative cardiac monitoring and visualization in patients undergoing existing or novel treatments, at various time intervals;
- analysis of cardiac function and performance in the operating theatre in real time during surgical manipulation of the heart;
- visualization of dopaminergic cell numbers in patients with Parkinson's Disease, at optimal intervals and during therapeutic intervention including antiparkinsonian drug treatment, lesion making, gene therapeutic manipulation of stem or other cells, syngeneic or xenografted dopaminergic cell transplantation including embryonal cells and their persistence ;
- co-imaging using multiple isotope systems and/or labeled ligands to image the therapeutic agents, cells, or gene therapy mechanism in relation to location and function of relevant neural substrates including dopaminergic cells, to exact dynamic assessment of disease and treatment response to correlate with clinical performance in the development of new treatment strategies;
- novel cancer treatments in lung, breast, ovary, GIT, prostate and brain where imaging and quantification of disease load and extent can be followed together with the imaging and quantification (location, activity and extent of coverage) of the tumor by the treatment agent: transfected gene therapy, stem cell or altered cell function, drug disposition, radiation effect (vide supra BNCT) to verify mechanism, access and delivery, to correlate with clinical response and rapidly, reliably and safely analyze efficacy, and accelerate the introduction of new agents in a cost effective and widely accessible way;
- X-ray holography, for example in industrial non destructive evaluation (NDE), neutron holography using beams of neutrons scattered off objects of interest, infrared holography in both medical (i.e. mammography) and industrial (NDE) applications.

**Claims**

1.  Imaging process for generating a 3-dimension representation of a 3-dimension observation field (3), said process including at least the following steps:

    (a) detecting radiations emitted by a plurality of voxels in the observation field, through a collimator (5) having radiation transmitting areas (16) which are non-uniformly distributed, said radiations being detected in a set of pixels forming a 2-dimension image of detection, thus determining a detected 2-dimension distribution H(I, J) of the radiations detected through the collimator (5), I and J being two indicia representing a position of each pixel where the radiations are detected,
    (b) and determining an estimated 3-dimension distribution of the radiation emissions hes(i,j,k) of the voxels in the observation field (3), which corresponds to said detected 2-dimension distribution H(I,J), where i, j and k are three indicia representing the position of each voxel, said estimated 3-dimension distribution of the radiation emissions hes(i,j,k) constituting said 3-dimension representation of the observation field.

2.  Imaging method according to claim 1, wherein in step (a), the collimator (5) through which said radiations are detected, has a unique spatial pulse response for each voxel of the observation field.

3.  Imaging method according to claim 1 or claim 2, wherein in step (a), the radiations are detected around a main axis (X) and the collimator (5) through which said radiations are detected, has an average transmittance, averaged on a circle of radius r around said main axis, which varies with said radius r.

4.  Imaging method according to claim 3, wherein in step (a), the collimator (5) through which said radiations are detected, has an average transmittance, averaged on a circle of radius r around said main axis (X), which sinusoidally with the square of the radius r.

5. Imaging method according to claim 3 or claim 4, wherein in step (a), the radiation transmitting areas (16) of the collimator (5) through which said radiations are detected, are evenly distributed on each circle of radius r around said main axis, comprised in the collimator.

6. Imaging method according to anyone of the preceding claims, wherein in step (b), the estimated distribution of radiation emissions hes(i,j,k) is estimated by an iterative process comprising successive iterations, starting from a provisional estimated distribution of the radiation emissions $hes_0(i,j,k)$, and each $n^{th}$ iteration includes the following sub-steps:

(b1) determining a calculated 2-dimension distribution of radiations $H'_{n-1}(I,J)$ in the pixels, corresponding to the provisional distribution of radiation emissions $hes_{n-1}(i,j,k)$

(b2) calculating an error function $E_{n-1}$ representative of differences between said calculated distribution $H'_{n-1}(I,J)$ and said detected distribution $H(I,J)$,

(b3) if said error function has a value which is comprised in a predetermined range (i.e., generally when said error function is less than a predetermined value), stopping the iterative process and deciding that $hes(i,j,k) = hes_{n-1}(i,j,k)$ ; and if said error function has a value which is not comprised in said predetermined range, determining a new provisional estimated distribution of radiation emissions $hes_n(i,j,k)$ so as to decrease the error function.

7. Imaging method according to claim 6, wherein in step (b1), the calculated 2-dimension distribution of radiations $H'_{n-1}(I/J)$ in the pixels is calculated by the formula :

$$H'_{n-1}(I,J) = \sum_i \sum_j \sum_k R(i,j,k;I,J).hes_{n-1}(i,j,k) \, ,$$

where $R(i,j,k;I,J)$ is a predetermined spatial pulse response between each voxel of the observation field and each pixel of the image of detection.

8. Imaging method according to anyone of claims 6-7, wherein in sub-step (b2), said error function is calculated according to the following formula :

$$E_{n-1} = \sum_I \sum_J (H(I,J) - H'_{n-1}(I,J))^2 \, .$$

9. Imaging method according to anyone of claim 6-8, wherein in sub-step (b3), one determines the new provisional estimated distribution of radiation emissions by a gradient method.

10. Imaging method according to anyone of claims 6-9, wherein said iterative process is conducted successively for several groups of voxels of the observation field.

11. Imaging method according to claim 10, wherein each group of voxels includes several non-contiguous voxels.

12. Imaging method according to anyone of the preceding claims, wherein in step (a), said detected 2-dimension distribution $H(I,J)$ is representative of a number of radiations detected in each pixel in a certain bandwidth, and in step (b) said estimated 3-dimension distribution of the radiation emissions hes(i,j,k) is representative of a number of radiations emitted by the voxels of the observation field in said bandwidth.

13. Imaging device specially designed to carry out the imaging method according to anyone of the preceding claims.

# FIG.1.

FIG.2

FIG.3.

**European Patent Office**

**EUROPEAN SEARCH REPORT**

Application Number

EP 02 29 1900

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | UNWIN C E ET AL: "Reconstruction of images from Gabor zone plate gamma ray holography" 3RD INTERNATIONAL CONFERENCE ON OPTICAL INFORMATION PROCESSING, MOSCOW, RUSSIA, 28-31 MAY 1999, vol. 3900, pages 345-352, XP002224252 Proceedings of the SPIE - The International Society for Optical Engineering, 1999, SPIE-Int. Soc. Opt. Eng, USA ISSN: 0277-786X | 1-5,13 | G06T11/00 G01T1/161 |
| Y | whole document | 6-12 | |
| Y | UNWIN C E: "Mid-term report, Reconstruction of Images from Gabor Zone Plate Gamma Ray Holography" PHD THESIS, [Online] 19 February 1999 (1999-02-19), XP002224253 Retrieved from the Internet: <URL:http://web.bham.ac.uk/ceu716/mid-term/report.html> [retrieved on 2002-12-06] Section "Reconstruction Methods - Matrix Inversion" | 6-12 | |
| Y | WAX M ET AL: "Efficient inversion of Toeplitz-block Toeplitz matrix" IEEE TRANSACTIONS ON ACOUSTICS, SPEECH AND SIGNAL PROCESSING, OCT. 1983, USA, vol. ASSP-31, no. 5, pages 1218-1221, XP002224254 ISSN: 0096-3518 * page 1218 - page 1221 * | 6-12 | |

**TECHNICAL FIELDS SEARCHED (Int.Cl.7)**

G06T
G01T

-/--

The present search report has been drawn up for all claims

| Place of search | Date of completion of the search | Examiner |
|---|---|---|
| MUNICH | 13 December 2002 | Werling, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 02 29 1900

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | FLEMING J S ET AL: "An evaluation of techniques for stationary coded aperture three-dimensional imaging in nuclear medicine" PROCEEDINGS OF THE INTERNATIONAL WORKSHOP ON X-RAY AND GAMMA -RAY IMAGING TECHNIQUES, SOUTHAMPTON, HANTS., UK, 13-15 JULY 1983, vol. 221, no. 1, pages 242-246, XP002224287 Nuclear Instruments & Methods in Physics Research, Section A (Accelerators, Spectrometers, Detectors and Associated Equipment), 15 March 1984, Netherlands ISSN: 0168-9002 * page 242 - page 245 * --- | 6-12 | |
| A | PRESS W H ET AL: "Numerical Recipes in C: the art of scientific computing - 2nd edition" 1992 , CAMBRIDGE UNIVERSITY PRESS XP002224454 * page 420 - page 425 * --- | 8,9 | |
| A | JOHNSON C A ET AL: "A data-parallel algorithm for iterative tomographic image reconstruction" FRONTIERS OF MASSIVELY PARALLEL COMPUTATION, 1999. FRONTIERS '99. THE SEVENTH SYMPOSIUM ON THE ANNAPOLIS, MD, USA 21-25 FEB. 1999, LOS ALAMITOS, CA, USA,IEEE COMPUT. SOC, US, 21 February 1999 (1999-02-21), pages 126-137, XP010323698 ISBN: 0-7695-0087-0 * page 132, paragraph 4.4 * --- | 10,11 | |

TECHNICAL FIELDS SEARCHED (Int.Cl.7)

-/--

The present search report has been drawn up for all claims

| Place of search | Date of completion of the search | Examiner |
|---|---|---|
| MUNICH | 13 December 2002 | Werling, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 02 29 1900

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A,D | BEYNON T D ET AL: "GABOR ZONE PLATE WITH BINARY TRANSMITTANCE VALUES" OPTICS LETTERS, OPTICAL SOCIETY OF AMERICA, WASHINGTON, US, vol. 17, no. 7, 1 April 1992 (1992-04-01), pages 544-546, XP000262608 ISSN: 0146-9592 * page 544 - page 546 * --- | 2-5 | |
| A | BARRETT H: "Fresnel zone plate imaging in nuclear medicine" JOURNAL OF NUCLEAR MEDICINE, JUNE 1972, USA, vol. 13, no. 6, pages 382-385, XP002224288 ISSN: 0161-5505 whole document ----- | 1-3 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 13 December 2002 | Werling, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)